# EUROPÄISCHE PATENTSCHRIFT

(11) **EP 2 763 809 B1**
(45) Veröffentlichungstag und Bekanntmachung des Hinweises auf die Patenterteilung: **24.06.2020**
(21) Anmeldenummer: 12772755.0
(22) Anmeldetag: 05.10.2012
(51) Int. Cl.: B23B 27/16

(54) **MINIATURISIERTE SCHNEIDPLATTE**
MINIATURE CUTTING INSERT
PLAQUETTE DE COUPE MINIATURE

(30) Priorität: 06.10.2011 DE 102011084091
(43) Veröffentlichungstag der Anmeldung: 13.08.2014
(73) Patentinhaber: CeramTec GmbH, 73207 Plochingen (DE)
(72) Erfinder: BEN AMOR, Raouf, 73547 Lorch (DE)
(74) Vertreter: Fehrenbacher, Eckhard Anton
(86) Internationale Anmeldenummer: PCT/EP2012/069705
(87) Internationale Veröffentlichungsnummer: WO 2013/050520

(56) Entgegenhaltungen:
- EP-A1- 1 995 007
- EP-A2- 0 901 995
- EP-B1- 1 414 607
- DE-A1- 4 240 295
- DE-A1- 19 854 873

## Beschreibung

Die Erfindung betrifft eine Schneidplatte für ein spanabhebendes Schneidwerkzeug, mit einer Schneidplattenoberseite und einer Schneidplattenunterseite, einer oder mehreren Seitenfläche(n), Schneidkanten am Übergang der Schneidplattenoberseite zu den oder die Seitenflächen und mit einer kreisförmigen Spannmulde in der Schneidplattenoberseite, die einen Außendurchmeser d1 aufweist.

Eine deratige Schneidplatte, auch als Wendeschneidplatte benannt, ist in der EP 1 414 607 B1 beschrieben. Verwendet werden diese Schneidplatten für ein spanabhebendes Schneidwerkzeug im Wesentlichen bestehend aus einem Trägerwerkzeug, das einen Plattensitz zur Aufnahme der Schneidplatte aufweist. Die Schneidplatte wird von einer Spannpratze mit einem Nocken im Trägerwerkzeug gehalten, wobei die Spannpratze über eine Spannschraube auf dem Trägerwerkzeug befestigt ist. Die Spannpratze ist direkt oder über ein Druckstück auf der zur Schneidplatte gewandten Unterseite mit einem Nocken versehen, der in die Spannmulde eingreift und die Schneidplatte verankert. Die Spannmulde ist kreisförmig ausgebildet und in der Mitte befindet sich ein Noppen, wobei die Spitze des Noppens oberhalb des Bodens der Mulde und unterhalb der Schneidplattenoberseite/Schneidplattenunterseite angeordnet ist. Eine Schneidplatte gemäß dem Oberbegriff des Anspruchs 1 ist aus EP 0 901 995 A2 bekannt.

Schneidplatten aus hochspröden Schneidstoffen werden bevorzugt über die eben beschriebene sogenannte Muldenspannung im Trägerwerkzeug gespannt. Hierdurch lassen sich Lochspannungen umgehen, die in der Regel mit einer Schwächung des Querschnitts verbunden sind. Diese Schwächung führt bei entsprechender Belastung zum Brechen der Schneidplatte.

Im Falle von PcBN-Schneidplatten (polykristallines kubisches Bornitrid) in massiver Ausführung ist das Volumen der Schneidplatten für die Herstellkosten besonders entscheidend. Kleine Schneidplatten bedeuten eine deutliche Kostensenkung und damit Wirtschaftlichkeitserhöhung. PcBN gehört zu der keramischen Schneidstofffamilie mit eingeschränkter Zähigkeit. Bohrungen in kleinere Schneidplatten einzubringen, bedeutet in der Regel Einbußen bei der Prozesssicherheit. Häufiges Brechen der Schneidplatten ist die Folge. Bei bestimmten Zerspanungsoperationen, wie zum Beispiel das Hartdrehen von Getriebe- und Lagerbauteilen, können sowohl keramische Schneidstoffe wie auch PcBN-Schneidstoffe eingesetzt werden. Formschlüssige Muldenspannsysteme, die eine sichere Austauschbarkeit von Schneidplatten aus den oben genannten Schneidstoffen anbieten sind nicht bekannt. Die sichere Verankerung der Schneidplatten im Plattensitz ist eine grundlegende Voraussetzung für eine sichere Funktionalität der Werkzeugsysteme. Bei der Auslegung der Spannmulde für Werkzeugsysteme, die eine Austauschbarkeit garantieren, muss sowohl auf die Pressbarkeit der Mulde in die Keramik geachtet werden wie auch auf ein Minimum an Volumen, das aufwendig aus dem hochharten PcBN abgetragen werden muss. PcBN bedeutet polykristallines kubisches Bornitrid.

Der Erfindung liegt die Aufgabe zugrunde, eine Schneidplatte nach dem Oberbegriff des Anspruchs 1 so weiterzubilden, dass deren Herstellkosten verringert sind.

Diese Aufgabe wird erfindungsgemäß durch eine miniaturisierte Schneidplatte gemäß Anspruch 1 erreicht. Erfindungsgemäß wird diese Aufgabe dadurch gelöst, dass für den Außendurchmesser d1 der Spannmulde 2 mm < d1 <= 6 mm, bevorzugt 2 mm < d1 < 5 mm gilt. Überraschend hat sich gezeigt, dass sich Schneidplatten mit derart kleinen Spannmulden sicher und fest in einem Werkzeug einspannen lassen und beim Zerspanen nicht aus dem Plattensitz gezogen werden. Schneidplatten mit diesen kleinen Spannmulden können klein hergestellt werden, da die Spannung über die Spannmulde erfolgt. Kleinere Schneidplatten bedingen weniger Material, wodurch die Herstellkosten minimiert sind.

Zur Verbesserung der Klemmung ist in der Spannmulde ein innenliegender kreisförmiger Noppen angeordnet, wobei sich die Spitze des Noppens oberhalb des Bodens der Spannmulde und unterhalb der Schneidplattenoberseite befindet und der Noppen einen Außendurchmesser d2 und eine Höhe h vom Boden der Spannmulde bis zur Spitze des Noppens aufweist und der Durchmesser d2 auf halber Höhe h des Noppens gemessen ist und für den Durchmesser d2 des Noppens 0,8 mm < d2 < 3,5 mm gilt. Mit diesen Noppen und deren Größe im Zusammenhang mit der Größe der Spannmulde ist die Klemmung optimiert.

Bevorzugt weist die Schneidplatte auf ihrer Schneidplattenunterseite die gleiche Spannmulde aufweist wie auf Ihrer Schneidplattenoberseite und ist damit eine Wendeschneidplatte.

In bevorzugter Ausführungsform besteht die Schneidplatte aus PcBN (polykristallines kubisches Bornitrid). Dieser Stoff ist extrem teuer, wodurch kleinere Schneidplatten eine deutliche Kostensenkung bewirken.

Die Spannmulde hat in einer bevorzugten Ausführungsform ein Volumen V von V < 8 mm³, bevorzugt V < 6 mm³. Die Volumen von Spannmulden nach dem Stand der Technik, zum Beispiel gemäß EP 1 414 607 B1, liegen um das Mehrfache höher.

Um im eingespannten Zustand der Schneidplatte ein Rutschen des Nockens einer Spannpratze über den Noppen zu verhindern und die Pressbarkeit zu erhöhen, geht bevorzugt die Spitze des Noppens über eine zur Senkrechten der Schneidplattenoberseite mit einem Noppenwinkel α1 geneigten Flanke in den Boden der Spannmulde über, wobei für den Noppenwinkel α1 das Folgende gilt 7° < α1 < 55° und bevorzugt 7° < α1 < 35°.

In einem speziellen Fall wurde für den Noppenwinkel α1 das Folgende gewählt 27°< α1 < 28°. Ein Rutschen des Nockens der Spannpratze über den Noppen trat in keinem Anwendungsfall auf.

Mit allen genannten Winkeln verbessert sich die Pressbarkeit im Vergleich zu α1 < 7° deutlich. Bekannte Spannungen nach dem Stand der Technik über einen mittig angeordneten Noppen sind deutlich flacher. Der Winkel α1 beträgt nach dem Stand der Technik α1 >> 45° und beträgt 60° und mehr. Bei solchen flachen Erhebungen ist die Pressbarkeit optimal, jedoch ist der Einhakeffekt und damit der gesicherte Rückzug sowie die Sicherung der Schneidplatte gegen µm-Bewegungen im Einsatz nicht gegeben. Auch kann der Nocken 11 der Spannpratze 5 über den flachen Noppen gleiten.

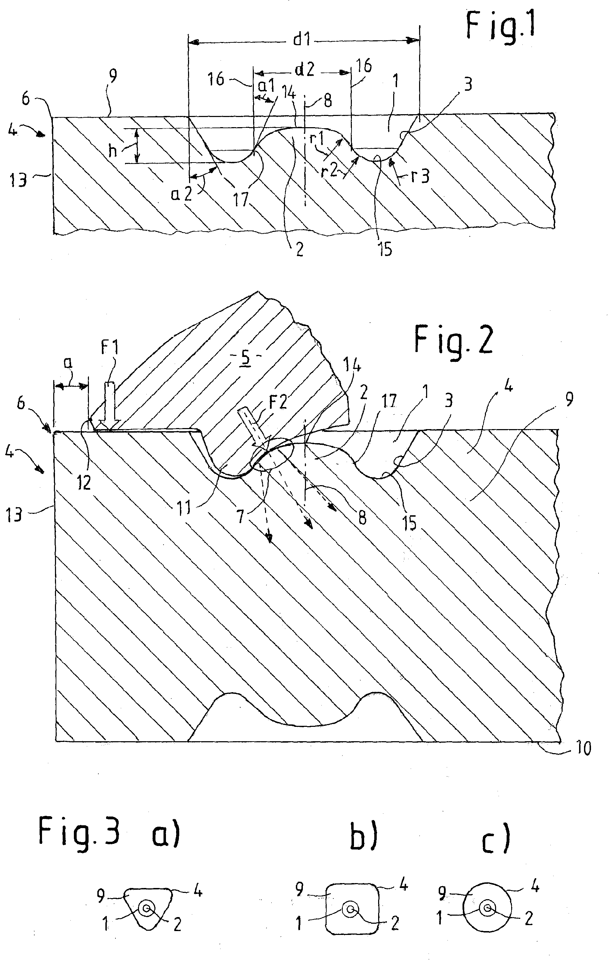

Da der Noppen ein tragendes Element ist und dieser aufgrund des Platzmangels einen sehr geringen Durchmesser d2 hat, muss die geometrische Auslegung so erfolgen, dass die Steifigkeit für die Übertragung der Kraft F1 ausreicht. Insbesondere das Verhältnis von Durchmesser d2 zu Höhe h (siehe Figur 1) muss auf die Anforderungen angepasst werden. Bevorzugt gilt für die Höhe h des Noppens, d.h. den Abstand vom Boden bis zur Spitze des Noppens, das Folgende 2 x d2 >= h >= 0,4 x d2.

Bevorzugt geht die Spitze des Noppens über einen Übergangsradius r1 in die Flanke und die Flanke über einen Übergangsradius r2 in den Boden der Spannmulde und der Boden der Spannmulde über einen Übergangsradius r3 in die Seitenflanke, die den Boden der Spannmulde mit der Schneidplattenoberseite/Schneidplattenunterseite verbindet, über, wobei die Radien r1, r2, r3 zwischen 0,05 und 0,6 mm, bevorzugt zwischen 0,2 bis 0,3 mm liegen.

Dies ist vorteilhaft, um die Festigkeit zu erhöhen. Die Übergangsradien r1, r2, r3 müssen eine gewisse Größe erreichen, anderenfalls entstehen Sollbruchstellen. Insbesondere der Radius r1 ist so zu wählen, dass eine Spannfläche zwischen Nocken an der Spannpratze und Noppe in der Spannmulde entstehen kann. Eine Spannlinie oder gar ein Spannpunkt würden zu erhöhten Belastungen führen. Die Radien r1 bis r3 liegen daher zwischen 0,05 und 0,6 mm, bevorzugt zwischen 0,2 bis 0,3 mm. So lässt sich eine genügend hohe Steifigkeit erzeugen, welche im Zusammenspiel mit der Druckfläche des Nockens der Spannpratze eine ausreichende Festigkeit bietet. Die Geometrie ist so ausgelegt, dass die bruchempfindliche Keramik auf Druck belastet wird.

Eine erfindungsgemäße Verwendung der beschriebenen Schneidplatte ist die Klemmung mit einer Spannpratze, an der ein Nocken angeordnet ist, der in die Spannmulde eingreift und mit einer Nase an der Spannpratze, die von der Schneidkante der Schneidplatte aus gesehen, vor der Spannmulde auf der Schneidplattenoberfläche/Schneidplattenunterseite aufliegt.

In einer bevorzugten Verwendung beträgt der Abstand a von der Schneidkante bis zur Nase der Spannpratze bei Schneidplatten mit einem Innkreis von 12,7 mm mindestens 2,2 mm und für Schneidplatten mit einem kleineren Innkreis als 12,7 mm mindestens 1,3 mm.

Bevorzugt wird die Schneidplatte für die Zerspanung von gehärtetem Stahl verwendet.

Nachfolgend eine Definition der in dieser Beschreibung verwendeten Begriffe:
Der Winkel α1 beschreibt die Neigung der Flanke des Noppens zur Senkrechten der Schneidplattenoberfläche.

Der Winkel α2 beschreibt die Neigung der Spannmulde vom Rand der Spannmulde zum Boden der Spannmulde, gemessen zur Senkrechten der Schneidplattenoberfläche.

Mit dem Buchstaben h ist die Höhe des Noppens vom Boden der Spannmulde bis zum höchsten Punkt des Noppens, d.h. bis zur Spitze des Noppens bezeichnet.

R1 ist der Radius mit dem der Kopf, bzw. die Spitze des Noppens in die Flanke des Noppens (beschrieben durch den Winkel α1) übergeht.

R2 ist der Radius mit dem die Flanke des Noppens (beschrieben durch den Winkel α1) in den Boden der Spannmulde übergeht.

R3 ist der Radius mit dem der Boden der Spannmulde in die Flanke der Spannmulde, beschrieben durch den Winkel α2, übergeht.

Nachfolgend wird die Erfindung anhand von zwei Figuren, die jeweils einen Querschnitt durch eine erfindungsgemäße Schneidplatte zeigen, beschrieben.

Figur 1 zeigt einen Schnitt durch die Mitte 8 einer erfindungsgemäßen Schneidplatte 4 und Figur 2 dieselbe Schneidplatte 4 im Einbauzustand, d.h. im Eingriff durch eine Spannpratze 5.

Je kleiner die Schneidplatte 4 (siehe Figuren 1 und 2) ist, desto kleiner ist auch der verfügbare Raum für die Auslegung der Spannmulde 1. Der verfügbare Raum reduziert sich weiter, wenn ein eingebrachter Abstand a der Nase 12 einer Spannpratze 5 von der Schneidkante 6 berücksichtigt wird (siehe Figur 2). Des Weiteren sind bei hochgenauen Bauteilen auch Bewegungen der Schneidplatte 4 im µm-Bereich nicht zulässig. Die sichere Verankerung fordert eine formschlüssige Anbindung der Schneidplatte 4 mit der Spannpratze 5. Wenn die Spannfläche 7 vor der Mitte 8 der Schneidplatte 4 platziert ist, reduziert sich das Risiko des sogenannten Aufschnäbelns. Aufschnäbeln bedeutet, dass der Nocken 11 (siehe Figur 2) an der Spannpratze 5 bei der Bearbeitung eines Werkstücks über die Noppe 2 rutscht. Vor der Mitte bedeutet in diesem Zusammenhang, dass der Nocken 11 an der zur Schneidkante 6 gewandten Seite der Spannmulde 1 in die Spannmulde 1 eingreift. Durch eine besondere Gestaltung der Noppe 2, lässt sich dies erfindungsgemäß verringern. Die Noppe 2 wird auch als Erhebung bezeichnet. Gegenstand der Erfindung ist daher eine miniaturisierte Schneidplatte 4 mit einer erfindungsgemäßen Spannmulde 1. Die Spannmulde 1 hat einen Durchmesser d1 von d1 <= 6 mm (<= bedeutet "kleiner gleich"), bevorzugt zwischen 2 < d1 < 5 mm (siehe Figur 1). Um eine sichere Klemmung zu gewährleisten, wird der Winkel α1 des Noppens 2 α1 < 55° gewählt. Bevorzugt liegt der Winkel zwischen 7° < α1 < 35°. Im speziellen Fall der Figuren 1, 2 wurde der Winkel 27°< α1 < 28° festgelegt. Hierdurch wird ein Rutschen des Nockens 11 der Spannpratze 5 über die Noppe 2 verhindert. Der Nocken 11 an der Spannpratze 5 hakt mit der Kraft F2 (siehe Figur 2) ein. Im Falle der Keramik verbessert sich die Pressbarkeit im Vergleich zu α1 < 7° deutlich. Bekannte Spannungen nach dem Stand der Technik über eine mittig angeordnete Erhebung sind deutlich flacher. Der Winkel α1 beträgt nach dem Stand der Technik α1 >> 45° und beträgt 60° und mehr. Bei solchen flachen Erhebungen ist die Pressbarkeit optimal, jedoch ist der Einhakeffekt und damit der gesicherte Rückzug sowie die Sicherung der Schneidplatte 4 gegen µm-Bewegungen im Einsatz nicht gegeben. Auch kann der Nocken 11 der Spannpratze 5 über die flache Erhebung gleiten.

Durch den kleinen Durchmesser d1 der erfindungsgemäßen Spannmulde 1 reduziert das abzutragende Volumen. Bei PcBN werden solche Spannmulden 1 meistens durch aufwendige Laserverfahren erzeugt. Im Vergleich zu herkömmlichen Spannmulden 1 lässt sich das Volumen auf mehr als 40% reduzieren, wodurch zusätzliche wirtschaftliche Vorteile entstehen. Da der Noppen 2 ein tragendes Element ist und dieser aufgrund des Platzmangels einen sehr geringen Durchmesser d2 hat, muss die geometrische Auslegung so erfolgen, dass die Steifigkeit für die Übertragung der Kraft F1 ausreicht. Insbesondere das Verhältnis von Durchmesser d2 zu Höhe h (siehe Figur 1) muss auf die Anforderungen angepasst werden. Das Verhältnis d/h kann bis zu 1 zu 2 betragen. Bevorzugt liegt das Verhältnis von d/h bei 1 zu 1. In diesem speziellen Fall beträgt das Verhältnis d/h 1 zu 0,5. Um die Festigkeit zu erhöhen, müssen die Übergangsradien r1 bis r3 (siehe Figur 1) eine gewisse Größe erreichen. anderenfalls entstehen Sollbruchstellen. Insbesondere der Radius r1 ist so zu wählen, dass eine Spannfläche 7 zwischen dem Nocken 5 an der Spannpratze 5 und dem Noppen 2 entstehen kann. Ein Spannlinie oder gar ein Spannpunkt würde zu erhöhten Belastungen führen. Die Radien r1 bis r3 liegen zwischen 0,05 und 0,6 mm, bevorzugt zwischen 0,2 bis 0,3 mm. So lässt sich eine genügend hohe Steifigkeit erzeugen, welche im Zusammenspiel mit der Druckfläche des Nockens 11 der Spannpratze 5 eine ausreichende Festigkeit bietet. Die Geometrie ist so ausgelegt, dass die bruchempfindliche Keramik auf Druck belastet wird. Es gelingt so eine Muldengröße d1 = 3 mm (hier in diesem speziellen bevorzugten Fall) sicher zu realisieren. Hierdurch ist eine Auflagefläche (vergl. F1) der Nase 12 der Spannpratze 5 vor der Mitte 8 der Wendeschneidplatte möglich, ohne einen kritischen Abstand a zu der Schneidkante in Kauf nehmen zu müssen.

Das Volumen V der Spannmulde 1 liegt bevorzugt bei V < 8 mm³ und besonders bevorzugt bei V < 6 mm³.

Die Figuren 3a, 3b, 3c zeigen verschiedene Ausgestaltungen einer erfindungsgemäßen Schneidplatte 4 in Draufsicht. Figur 3a zeigt eine dreieckige Schneidplatte 4 mit einer kreisförmigen Spannmulde 1 und einem in der Spannmulde angeordneten Noppen 2. Figur 3b zeigt eine quadratische Schneidplatte 4 mit einer kreisförmigen Spannmulde 1 und einem in der Spannmulde angeordneten Noppen 2. Figur 3c zeigt eine zylindrische Schneidplatte 4 mit einer kreisförmigen Spannmulde 1 und einem in der Spannmulde angeordneten Noppen 2.

## Patentansprüche

1. Schneidplatte (4) für ein spanabhebendes Schneidwerkzeug, mit einer Schneidplattenoberseite (9) und einer Schneidplattenunterseite (10), einer oder mehreren Seitenfläche(n) (13), Schneidkanten (6) am Übergang der Schneidplattenoberseite (9) zu den oder die Seitenflächen (6) und mit einer kreisförmigen Spannmulde (1) in der Schneidplattenoberseite (9), die einen Außendurchmeser d1 aufweist, wobei für den Außendurchmesser d1 der Spannmulde (1) 2 mm < d1 <= 6 mm, bevorzugt 2 mm < d1 < 5 mm gilt, **dadurch gekennzeichnet, dass** die Spannmulde (1) einen innenliegenden kreisförmigen Noppen (2) aufweist, wobei sich die Spitze (14) des Noppens (2) oberhalb des Bodens (15) der Spannmulde (1) und unterhalb der Schneidplattenoberseite (9) befindet und der Noppen (2) einen Außendurchmesser d2 und eine Höhe h vom Boden der Spannmulde (1) bis zur Spitze (14) des Noppens (2) aufweist und der Durchmesser d2 auf halber Höhe h des Noppens (2) gemessen ist und für den Durchmesser d2 des Noppens (2) 0,8 mm < d2 < 3,5 mm gilt.

2. Schneidplatte nach Anspruch 1, **dadurch gekennzeichnet, dass** die Schneidplatte (4) auf ihrer Schneidplattenunterseite (10) die gleiche Spannmulde (1) aufweist wie auf Ihrer Schneidplattenoberseite (9) und damit eine Wendeschneidplatte ist.

3. Schneidplatte nach Anspruch 1 oder 2, **dadurch gekennzeichnet, dass** die Schneidplatte (4) aus PcBN (polykristallines kubisches Bornitrid) besteht.

4. Schneidplatte nach einem der Ansprüche 1 bis 3, **dadurch gekennzeichnet, dass** die Spannmulde (1) ein Volumen von V < 8 mm³, bevorzugt V < 6 mm³ hat.

5. Schneidplatte nach einem der Ansprüche 1 bis 4, **dadurch gekennzeichnet, dass** die Spitze (14) des Noppens (2) über eine zur Senkrechten (16) der Schneidplattenoberseite (9) mit einem Noppenwinkel α1 geneigten Flanke (17) in den Boden (15) der Spannmulde (1) übergeht, wobei für den Noppenwinkel α1 das Folgende gilt 7° < α1 < 55° und bevorzugt 7° < α1 < 35°.

6. Schneidplatte nach Anspruch 5, **dadurch gekennzeichnet, dass** für den Noppenwinkel α1 das Folgende gilt 27°< α1 < 28°.

7. Schneidplatte nach einem der Ansprüche 1 bis 6, **dadurch gekennzeichnet, dass** für die Höhe h des Noppens (2), d.h. den Abstand vom Boden (15) bis zur Spitze (14) des Noppens (2), das Folgende gilt 2 x d2 >= h >= 0,4 x d2.

8. Schneidplatte nach einem der Ansprüche 1 bis 7, **dadurch gekennzeichnet, dass** die Spitze (14) des Noppens (2) über einen Übergangsradius r1 in die Flanke (17) und die Flanke (17) über einen Übergangsradius r2 in den Boden (15) der Spannmulde (1) und der Boden (15) der Spannmulde (1) über einen Übergangsradius r3 in die Seitenflanke (3), die den Boden (15) der Spannmulde (1) mit der Schneidplattenoberseite/Schneidplattenunterseite (9, 10) verbindet, übergeht, wobei die Radien r1, r2, r3 zwischen 0,05 und 0,6 mm, bevorzugt zwischen 0,2 bis 0,3 mm liegen.

9. Verwendung einer Schneidplatte (4) nach einem der Ansprüche 1 bis 8 zur Klemmung mit einer Spannpratze (5), an der ein Nocken (11) angeordnet ist, der in die Spannmulde (1) eingreift und mit einer Nase (12) an der Spannpratze (5), die von der Schneidkante (6) der Schneidplatte (4) aus gesehen, vor der Spannmulde (1) auf der Schneidplattenoberfläche/Schneidplattenunterseite (9, 10) aufliegt.

10. Verwendung nach Anspruch 9, **dadurch gekennzeichnet, dass** der Abstand a von der Schneidkante (6) bis zur Nase (12) der Spannpratze (5) bei Schneidplatten (4) mit einem Innkreis von 12,7 mm mindestens 2,2 mm und für Schneidplatten (4) mit einem kleineren Innkreis als 12,7 mm mindestens 1,3 mm beträgt.

11. Verwendung einer Schneidplatte (4) nach einem der Ansprüche 1 bis 8 für die Zerspanung von gehärtetem Stahl.

## Claims

1. Cutting plate (4) for a chip-removing cutting tool, comprising a cutting plate upper face (9) and a cutting plate lower face (10), one or more lateral faces (13), cutting edges (6) at the transition from the cutting plate upper face (9) to the lateral face(s) (6), and comprising a circular clamping trough (1) in the cutting plate upper face (9), which has an outer diameter d1, with 2 mm < d1 <= 6 mm, preferably 2 mm < d1 < 5 mm, applying to the outer diameter d1 of the clamping trough (1), **characterized in that** the clamping trough (1) has an inner circular protrusion (2), the tip (14) of the protrusion (2) being above the base (15) of the clamping trough (1) and below the cutting plate upper face (9), and the protrusion (2) having an outer diameter d2 and a height h from the base of the clamping trough (1) to the tip (14) of the protrusion (2), and the diameter d2 being measured at half the height h of the protrusion (2) and 0.8 mm < d2 < 3.5 mm applying to the diameter d2 of the protrusion (2).

2. Cutting plate according to claim 1, **characterized in that** the cutting plate (4) has the same clamping trough (1) on the cutting plate lower face (10) thereof as on the cutting plate upper face (9) thereof, and is therefore an indexable cutting plate.

3. Cutting plate according to either claim 1 or claim 2, **characterized in that** the cutting plate (4) consists of PcBN (polycrystalline cubic boron nitride).

4. Cutting plate according to any of claims 1 to 3, **characterized in that** the clamping trough (1) has a volume of V < 8 mm³, preferably V < 6 mm³.

5. Cutting plate according to any of claims 1 to 4, **characterized in that** the tip (14) of the protrusion (2) transitions into the base (15) of the clamping trough (1) via a flank (17) which is inclined to the perpendicular (16) of the cutting plate upper face (9) at a protrusion angle α1, the following applying to the protrusion angle α1, 7° < α1 < 55° and preferably 7° < α1 < 35°.

6. Cutting plate according to claim 5, **characterized in that** the following applies to the protrusion angle α1, 27° < α1 < 28°.

7. Cutting plate according to any of claims 1 to 6, **characterized in that** the following applies to the height h of the protrusion (2), i.e. the distance from the base (15) to the tip (14) of the protrusion (2), 2 × d2 >= h >= 0.4 × d2.

8. Cutting plate according to any of claims 1 to 7, **characterized in that** the tip (14) of the protrusion (2) transitions into the flank (17) via a transition radius r1, the flank (17) transitions into the base (15) of the clamping trough (1) via a transition radius r2, and the base (15) of the clamping trough (1) transitions into the lateral flank (3), which connects the base (15) of the clamping trough (1) to the cutting plate upper face/cutting plate lower face (9, 10), via a transition radius r3, the radii r1, r2, r3 being between 0.05 and 0.6 mm, preferably between 0.2 and 0.3 mm.

9. Use of a cutting plate (4) according to any of claims 1 to 8 for clamping with a clamping claw (5) on which a cam (11) is arranged that engages in the clamping trough (1), and with a nose (12) on the clamping claw (5) which, seen from the cutting edge (6) of the cutting plate (4), rests in front of the clamping trough (1) on the cutting plate upper face/cutting plate lower face (9, 10).

10. Use according to claim 9, **characterized in that** the distance a from the cutting edge (6) to the nose (12) of the clamping claw (5) is at least 2.2 mm in the case of cutting plates (4) which have an inner circle of 12.7 mm, and is at least 1.3 mm for cutting plates (4) which have an inner circle which is smaller than 12.7 mm.

11. Use of a cutting plate (4) according to any of claims 1 to 8 for machining hardened steel.

## Revendications

1. Plaquette de coupe (4) pour un outil de coupe à enlèvement de copeaux, comportant une face supérieure de plaquette de coupe (9) et une face inférieure de plaquette de coupe (10), une ou plusieurs faces latérales (13), des arêtes de coupe (6) à la jonction entre la face supérieure de plaquette de coupe (9) et la ou les surfaces latérales (6), et comportant un creux de serrage (1) circulaire dans la face supérieure de plaquette de coupe (9) de diamètre extérieur d1, dans laquelle 2 mm < d1 <= 6 mm, de préférence 2 mm < d1 < 5 mm s'applique au diamètre extérieur d1 du creux de serrage (1), **caractérisé en ce que** le creux de serrage (1) présente un bouton (2) circulaire interne, la pointe (14) du bouton (2) se trouvant au-dessus du fond (15) du creux de serrage (1) et en dessous de la face supérieure de plaquette de coupe (9), et le bouton (2) ayant un diamètre extérieur d2 et une hauteur h allant du fond du creux de serrage (1) à la pointe (14) du bouton (2), et le diamètre d2 étant mesuré à la moitié de la hauteur h du bouton (2) et 0,8 mm < d2 < 3,5 mm s'appliquant au diamètre d2 du bouton (2).

2. Plaquette de coupe selon la revendication 1, **caractérisée en ce que** la plaquette de coupe (4) présente, sur sa face inférieure de plaquette de coupe (10), le même creux de serrage (1) que sur sa face supérieure de plaquette de coupe (9), et est donc une plaquette de coupe amovible.

3. Plaquette de coupe selon la revendication 1 ou 2, **caractérisée en ce que** la plaquette de coupe (4) est en PcBN (nitrure de bore cubique polycristallin).

4. Plaquette de coupe selon l'une des revendications 1 à 3, **caractérisée en ce que** le creux de serrage (1) a un volume de V < 8 mm³, de préférence de V < 6 mm³.

5. Plaquette de coupe selon l'une des revendications 1 à 4, **caractérisée en ce que** la pointe (14) du bouton (2) se prolonge dans le fond (15) du creux de serrage (1) par un flanc (17) incliné par rapport à la verticale (16) de la face supérieure de plaquette de coupe (9) selon un angle de bouton α1, l'angle de bouton α1 étant de 7° < α1 < 55° et de préférence de 7° < α1 < 35°.

6. Plaquette de coupe selon la revendication 5, **caractérisée en ce que** ce qui suit s'applique à l'angle de bouton α1 : 27° < α1 < 28°.

7. Plaquette de coupe selon l'une des revendications 1 à 6, **caractérisée en ce que** ce qui suit s'applique à la hauteur h du bouton (2), c'est-à-dire à la distance entre le fond (15) et la pointe (14) du bouton (2) : 2 x d2 >= h >= 0,4 x d2.

8. Plaquette de coupe selon l'une des revendications 1 à 7, **caractérisée en ce que** la pointe (14) du bouton (2) se prolonge dans le flanc (17) par un rayon de transition r1, le flanc (17) se prolonge dans le fond (15) du creux de serrage (1) par un rayon de transition r2, et le fond (15) du creux de serrage (1) se prolonge dans le flanc latéral (3) par un rayon de transition r3, lequel flanc latéral relie le fond (15) du creux de serrage (1) à la face supérieure de plaquette de coupe/face inférieure de plaquette de coupe (9, 10), les rayons r1, r2, r3 étant compris entre 0,05 et 0,6 mm, de préférence entre 0,2 et 0,3 mm.

9. Utilisation d'une plaquette de coupe (4) selon l'une des revendications 1 à 8, destinée à être serrée à une griffe de serrage (5) au niveau de laquelle une came (11) est disposée, laquelle came vient en prise dans le creux de serrage (1), et à un nez (12) au niveau de la griffe de serrage (5), lequel nez qui, vu depuis l'arête de coupe (6) de la plaquette de coupe (4), repose sur la face supérieure de plaquette de coupe/face inférieure de plaquette de coupe (9, 10) devant le creux de serrage (1).

10. Utilisation selon la revendication 9, **caractérisée en ce que** la distance a entre le bord de coupe (6) et le nez (12) de la griffe de serrage (5) est d'au moins 2,2 mm pour les plaquettes de coupe (4) ayant un cercle intérieur de 12,7 mm et d'au moins 1,3 mm pour les plaquettes de coupe (4) ayant un cercle intérieur inférieur à 12,7 mm.

11. Utilisation d'une plaquette de coupe (4) selon l'une des revendications 1 à 8, pour l'usinage de l'acier trempé.
